# EUROPEAN PATENT APPLICATION

(11) **EP 4 243 148 A1**
(43) Date of publication of application: **13.09.2023**
(21) Application number: 21965847.3
(22) Date of filing: 31.12.2021
(51) Int. Cl.: H01M 10/0567

(54) **ELECTROLYTE, SECONDARY BATTERY, AND ELECTRIC DEVICE**

(71) Applicant: Contemporary Amperex Technology Co., Limited, Ningde City, Fujian 352100 (CN)
(72) Inventor: LIAO, Shangju, Ningde, Fujian 352100 (CN); LIU, Chengyong, Ningde, Fujian 352100 (CN); HU, Bobing, Ningde, Fujian 352100 (CN); CAI, Xiaolan, Ningde, Fujian 352100 (CN)
(74) Representative: Gong, Jinping
(86) International application number: PCT/CN2021/143826
(87) International publication number: WO 2023/123413

(57) **Abstract**

The present application provides an electrolytic solution, including a lithium salt, an organic solvent and an additive, the additive is a salt with a formula of M1M2ₓO_{y}, the M1 is selected from one or more of alkali metal element and NH4⁺, the M2 is selected from one or more of VB-VIII group elements in a fourth cycle of a periodic table of elements, x is 0.01-4, and y is 0.1-9. The present application further relates to a secondary battery, a battery module, a battery pack and a power consumption apparatus including the electrolytic solution.

## Description

### TECHNICAL FIELD

The present application relates to the field of lithium battery technologies, and in particular, to an electrolytic solution, a secondary battery, a battery module, a battery pack and a power consumption apparatus.

### BACKGROUND

In recent years, with the wider application of secondary batteries, the secondary batteries are widely applied to energy storage power systems, such as hydraulic, thermal, wind and solar power stations, as well as many fields such as electrical tools, electric bicycles, electric motorcycles, electric vehicles, military equipment and aerospace. Due to the great development of the secondary batteries, higher requirements are put forward for their energy density, cycle performance, safety performance, and the like.

A theoretical specific capacity of a lithium metal (3860mAhg⁻¹) is extremely high, making it become a best choice for a negative electrode material of the next generation of a high specific energy secondary battery. However, safety performance and cycle performance and other aspects of existing lithium metal secondary batteries need to be further improved.

### SUMMARY

The present application is made in view of the above subject, and a purpose thereof is to provide an electrolytic solution so that a secondary battery containing the electrolytic solution has improved cycle performance and safety performance.

In order to achieve the above purpose, the present application provides an electrolytic solution and a secondary battery, a battery module, a battery pack and a power consumption apparatus containing the electrolytic solution.

A first aspect of the present application provides an electrolytic solution, including a lithium salt, an organic solvent and an additive, the additive is a salt with a formula of M1M2ₓO_{y}, the M1 is selected from one or more of alkali metal element and NH4⁺, the M2 is selected from one or more of VB-VIII group elements in a fourth cycle of a periodic table of elements, x is 0.01-4, and y is 0.1-9.

In the present application, a strong oxidizing inorganic salt additive is added to the electrolytic solution, the additive may take priority over the organic solvent to obtain an electron, and react with an active lithium metal to generate dense SEI film depositing on a surface of the lithium metal, so as to avoid or reduce electrolytic solution loss and inhibit a growth of a lithium dendrite, thereby improving cycle performance and safety performance of the secondary battery.

In any embodiment, the alkali metal element is one or more of Li, Na, K and Rb.

In any embodiment, the VB-VIII group elements in the fourth cycle of the periodic table of elements are one or more of V, Cr, Mn, Fe, Co and Ni.

In any embodiment, the additive is one or more of NH₄VO₃, KMnO₄, Na₂FeO₄, LiCoO₂, Na₃VO₄, NaVO₃, K₂Cr₂O₇ and NaCoO₂, and optionally NH₄VO₃ or KMnO₄.

In any embodiment, a content of the additive is 0.01-1 weight%, and optionally 0.1-0.5 weight%, based on a total weight of the electrolytic solution. When the content of the additive is within a given range, it may meet loss for generating oxide SEI film in each charging process, thereby further improving cycle performance and safety performance of the secondary battery.

In any embodiment, the additive is added to the electrolytic solution in a form of a nanoparticle, and a particle size of the nanoparticle is 300-800nm. When the additive is added to the electrolytic solution in the form of the nanoparticle, cycle performance of the secondary battery may be further improved.

In any embodiment, a content of the lithium salt is 0.5-2mol/L, and optionally 1-2mol/L, based on a total volume of electrolytic solution.

In any embodiment, a content of the organic solvent is 80-85 weight%, based on the total weight of the electrolytic solution.

In any embodiment, the electrolytic solution further includes a cosolvent, and optionally, the cosolvent is one or more of propylene carbonate, difluoro vinyl carbonate, dimethyl carbonate, diethyl carbonate, monofluorobenzene, difluorobenzene, trifluorobenzene, succinonitrile and 1,3-dioxolane. When the electrolytic solution further contains the cosolvent, it may not only maintain a migration rate of the additive, but also not destroy an original function of the electrolytic solution, thereby further improving cycle performance and safety performance of the secondary battery.

In some embodiments, a content of the cosolvent is greater than 0 and less than or equal to 6 weight% , and optionally 1-3 weight%, based on the total weight of the electrolytic solution. When the content of the cosolvent is within a given range, a concentration of the additive dissolved in the electrolytic solution may be controlled, thereby improving cycle performance and safety performance of the secondary battery.

A second aspect of the present application provides a secondary battery, including the electrolytic solution according to the first aspect of the present application.

A third aspect of the present application provides a battery module, including the secondary battery according to the second aspect of the present application.

A fourth aspect of the present application provides a battery pack, including the battery module according to the third aspect of the present application.

A fifth aspect of the present application provides a power consumption apparatus, including at least one selected from the secondary battery according to the second aspect of the present application, the battery module according to the third aspect of the present application or the battery pack according to the fourth aspect of the present application.

The battery module, the battery pack, or the power consumption apparatus in the present application include the secondary battery according to the present application, and therefore have at least the same advantages as the secondary battery.

### BRIEF DESCRIPTION OF DRAWINGS

FIG. 1 is a comparison diagram before and after adding an inorganic salt additive and a cosolvent, a is an electrolytic solution before adding the inorganic salt additive and the cosolvent, and b is an electrolytic solution after adding the inorganic salt additive and the cosolvent.
FIG. 2 is a schematic diagram of a working principle of a technical solution of the present application.
FIG. 3 is a cycle performance comparison curve of a secondary battery in Embodiment 2-1 and a secondary battery in Comparative Example 1 of the present application.
FIG. 4 is a first cycle deposition morphology of a lithium metal negative electrode of the secondary battery in Embodiment 2-1.
FIG. 5 is a first cycle deposition morphology of a lithium metal negative electrode of the secondary battery in Comparative Example 1-1.
FIG. 6 is a schematic diagram of a secondary battery according to an embodiment of the present application.
FIG. 7 is an exploded view of the secondary battery according to an embodiment of the present application shown in FIG. 6.
FIG. 8 is a schematic diagram of a battery module according to an embodiment of the present application.
FIG. 9 is a schematic diagram of a battery pack according to an embodiment of the present application.
FIG. 10 is an exploded view of the battery pack according to an embodiment of the present application shown in FIG. 9.
FIG. 11 is a schematic diagram of a power consumption apparatus in which a secondary battery is used as a power source according to an embodiment of the present application.

### DESCRIPTION OF REFERENCE SIGNS

1 battery pack; 2 upper box body; 3 lower box body; 4 battery module; 5 secondary battery; 51 housing; 52 electrode assembly; 53 top cover assembly.

### DESCRIPTION OF EMBODIMENTS

Hereinafter, embodiments that specifically disclose an electrolytic solution, a secondary battery, a battery module, a battery pack and a power consumption apparatus of the present application may be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are further contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, all steps of the present application may be performed sequentially or randomly, but preferably, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

A theoretical specific capacity of a lithium metal (3860mAhg⁻¹) is extremely high, making it become a best choice for a negative electrode material of the next generation of a high specific energy secondary battery. Because a standard potential of a lithium metal negative electrode is very low, a lithium metal secondary battery mainly has the following problems: first, the lithium metal is extremely active, and it is difficult to avoid that it may react with the electrolytic solution during the charging and discharging process to generate SEI film, causing irreversible loss of the electrolytic solution, and with the increase of a number of cycles, the lithium metal secondary battery may experience a nosedive phenomenon in which capacity drops sharply; second, the electrolytic solution continuously reacts with the lithium metal to form the SEI film, and the SEI film is continuously thickened, making it difficult to conduct Li⁺, and causing a volume expansion of a cell at the same time; and third, the SEI film formed by consuming the electrolytic solution is not dense, which may expose an active site of the lithium meta and lead to a growth of a lithium dendrite during the charging process, and pierce a membrane, which may lead to short circuit of positive electrode and negative electrode, rapid heat release, and cause fire, explosion and other safety problems.

At present, in order to solve the problem of high activity of the lithium metal negative electrode, a solvent system with a high LUMO orbit is often used to avoid the formation of the SEI film, but the existing electrolytic solution system is difficult to obtain an ideal result. In order to solve the problem of volume expansion during the deposition of the lithium metal, a flexible polymer additive is often used to generate flexible SEI film, which may release stress caused by lithium metal expansion through its flexibility during the deposition process of the lithium metal negative electrode. There is still no good solution to the problem of the growth of the lithium dendrite caused by the exposure of the active site of the lithium metal during the charging process due to breakdown of the SEI film during the discharging process.

The present invention introduces a strong oxidizing inorganic salt additive which is easy to react with an active lithium metal in the electrolytic solution to generate a dense protective layer, and the protective layer may isolate the lithium metal from the electrolytic solution to achieve an aim of protecting the lithium metal in a cycle process of charging and discharging.

### [Electrolytic solution]

In one embodiment of the application, the present application proposes an electrolytic solution, including a lithium salt, an organic solvent and an additive, the additive is a salt with a formula of M1M2ₓO_{y}, the M1 is selected from one or more of alkali metal element and NH4⁺, the M2 is selected from one or more of VB-VIII group elements in a fourth cycle of a periodic table of elements, x is 0.01-4, and y is 0.1-9.

In the present application, a strong oxidizing inorganic salt additive is added to the electrolytic solution, the additive may take priority over the organic solvent to obtain an electron, and react with an active lithium metal to generate dense SEI film depositing on a surface of the lithium metal, so as to avoid or reduce electrolytic solution loss and inhibit a growth of a lithium dendrite, thereby improving cycle performance and safety performance of the secondary battery.

Although a mechanism is still unclear, the inventor of the present application speculates that it is due to the following reasons: the SEI film may be broken down in the discharging process, and the active lithium metal may be exposed at a broken down place, providing a high-throughput migration channel for Li⁺; and during the charging process, the additive may take priority over the organic solvent to obtain the electron, and react with the active lithium metal to generate dense oxide SEI film and depositing on the surface of the lithium metal, thereby achieving the following effects:
1. When the SEI film is broken down in the discharging process, the additive may take priority over the organic solvent to obtain the electron in the charging process, after obtaining the electron, a dense passive film is quickly formed on the surface of the lithium metal negative electrode to repair the SEI film, so as to avoid or reduce electrolytic solution loss;
2. The generated oxide SEI film is mainly composed of an inorganic component, which is thin and dense (without defects), so it has a good Li⁺ conductivity and may provide a fast migration channel for Li⁺, so that the Li⁺ may be uniformly deposited during the charging process, on the one hand, the SEI film may not bear a larger volume expansion stress, and on the other hand, even if the SEI film is damaged, it may be quickly repaired; and
3. An active site of the lithium metal exposed by the breakdown of the SEI film during the discharging process is rapidly passivated, thereby inhibiting the growth of the lithium dendrite during the charging process.

In some embodiments, x optionally is 0.1-2, and further optionally 0.3-1; and y optionally is 1-6, and further optionally 1.3-4.

In some embodiments, the alkali metal element is one or more of Li, Na, K and Rb.

In some embodiments, the VB-VIII group elements in the fourth cycle of the periodic table of elements are one or more of V, Cr, Mn, Fe, Co and Ni.

In some embodiments, the additive is one or more of NH₄VO₃, KMnO₄, Na₂FeO₄, LiCoO₂, Na₃VO₄, NaVO₃, K₂Cr₂O₇ and NaCoO₂, and optionally NH₄VO₃ or KMnO₄.

In some embodiments, a content of the additive is 0.01-1 weight%, and optionally 0.1-0.5 weight%, based on a total weight of the electrolytic solution. When the content of the additive is within a given range, it may meet loss for generating oxide SEI film in each charging process, thereby further improving cycle performance and safety performance of the secondary battery. If the content of the additive is too small, an effect may not be achieved; and if the content of the additive is too large, a passivation reaction is violent, which is not conducive to the generation of thin and dense oxide SEI film, and too many nanoparticles are easy to agglomerate to generate a precipitation, causing other problems.

In some embodiments, the additive is added to the electrolytic solution in a form of a nanoparticle, and a particle size of the nanoparticle is 300-800nm.

When the additive is added to the electrolytic solution in the form of the nanoparticle, a slightly excessive additive is suspended in the electrolytic solution in the form of the nanoparticle, once the additive is consumed in the charging process to generate the oxide SEI film, the nanoparticle may continue to dissolve during shelving or discharging, making the additive remain saturated again to maintain a long-term cycle demand, thereby further improving cycle performance of the secondary battery.

In some embodiments, the nanoparticle is obtained by a vibration grinding device (ZM type).

In some embodiments, the nanoparticle is prepared by a melt-cooling method. The melt-cooling method includes placing a solid inorganic salt in a container, adjusting a temperature of a heating device to be higher than a melting point of the inorganic salt and lower than a decomposition temperature of the inorganic salt, heating the container and a substrate through the heating device, so as to melt the solid inorganic salt into a molten liquid; and dipping a molten inorganic salt with a rod that does not react with the molten inorganic salt, dropping it on the substrate that is not soaked with the molten inorganic salt, and then removing a droplet of the molten inorganic salt from the substrate and cooling it, so as to obtain an inorganic salt nanoparticle on a surface of the substrate.

In the present application, a scanning electron microscope (SEM) is used to analyze and determine the particle size of the nanoparticle, and a dispersion degree and a maximum solubility of the nanoparticle of the additive in an electrolytic solution liquid phase are tested by a laser particle size analyzer (Zetasizer Ultra). An inductively coupled plasma atomic emission spectrometer (ICP-AES) analysis test instrument is used to analyze a content of V and other important elements in the electrolytic solution, so as to calculate a concentration of a dissolved additive.

In some embodiments, the lithium salt may be selected from one or more of lithium hexafluorophosphate (LiPF₆), lithium tetrafluoroborate (LiBF₄), lithium perchlorate (LiClO₄), lithium hexafluorarsenate (LiAsF₆), lithium bisfluorosulfonimide (LiFSI), lithium bistrifluoromethanesulfonimidate (LiTFSI), Lithium Trifluoromethanesulfonate (LiTFS), lithium trifluorobesylate, lithium difluorophosphate (LiPO₂F₂), lithium dioxalate borate (LiODFB), lithium dioxalate borate (LiBOB), lithium difluorophosphate and lithium tefluorophosphate.

In some embodiments, a content of the lithium salt is 0.5-2mol/L, and optionally 1-2mol/L, based on a total volume of electrolytic solution.

In some embodiments, the organic solvent may be selected from at least one of ethylene carbonate, propylene carbonate, ethyl methyl carbonate, diethyl carbonate, dimethyl carbonate, dipropyl carbonate, methyl ethyl carbonate, ethyl propyl carbonate, butylene carbonate, fluoroethylene carbonate, methyl formate, methyl acetate, ethyl acetate, propyl acetate, methyl propionate, ethyl propionate, ethyl propionate, methyl butyrate, ethyl butyrate, 1, 4-butyrolactone, sulfolane, dimethyl sulfone, methyl ethyl sulfone and diethyl sulfone.

In some embodiments, a content of the organic solvent is 80-85 weight%, based on the total weight of the electrolytic solution.

In some embodiments, the electrolytic solution further includes a cosolvent, and optionally, the cosolvent is one or more of propylene carbonate, difluoro vinyl carbonate, dimethyl carbonate, diethyl carbonate, monofluorobenzene, difluorobenzene, trifluorobenzene, succinonitrile and 1,3-dioxolane.

The cosolvent has both polar and non-polar characteristics at the same time, which may not only dissolve the inorganic salt additive, but also mutually dissolve with the organic solvent of the electrolytic solution. By adding the cosolvent to the electrolytic solution, the inorganic salt additive is in a local high concentration state in the electrolytic solution, this state may not only maintain a migration rate of the additive, but also not destroy an original function of the electrolytic solution, thereby further improving cycle performance and safety performance of the secondary battery.

In some embodiments, a content of the cosolvent is greater than 0 and less than or equal to 6 weight%, and optionally 1-3 weight%, based on the total weight of the electrolytic solution.

When the content of the cosolvent is within a given range, a concentration of the additive dissolved in the electrolytic solution may be controlled, so that the additive dissolved in the electrolytic solution may meet loss for generating oxide SEI film in each charging process, thereby further improving cycle performance and safety performance of the secondary battery. If the content of the cosolvent is too large, there is no nanoparticle of the additive in the electrolytic solution, and it is difficult to maintain the concentration of the additive unchanged during the process of charging and discharging.

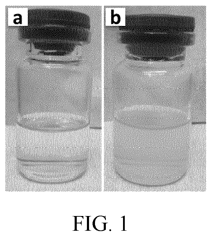

FIG. 1 is a result before and after adding an inorganic salt additive and a cosolvent to an electrolytic solution according to an embodiment of the present application. The result shows that the inorganic salt additive may be completely dispersed in the electrolytic solution to form a uniform solution.

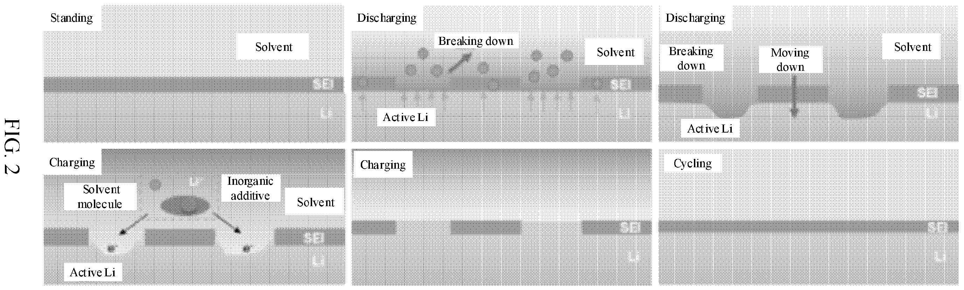

FIG. 2 is a schematic diagram of a working principle of a technical solution of the present application. As shown in FIG. 2, during the discharging process, SEI film is broken down and moves down with the dissolution of a lithium metal and the migration of Li⁺. During the charging process, the inorganic salt additive dissolved in the cosolvent takes priority over the organic solvent in the electrolytic solution to obtain an electron, it may quickly form a dense oxide film on the lithium metal negative electrode to achieve an effect of repairing the SEI film, so as to reduce or avoid an irreversible loss of the organic solvent of the electrolytic solution and inhibit a growth of a lithium dendrite. In addition, the oxide SEI film formed is conducive to the uniform deposition of the lithium metal, making the SEI film rise evenly, and during the lifting process, the SEI film may not bear larger volume expansion stress.

In some embodiments, the electrolytic solution further optionally includes the additive. For example, the additive may include a negative film forming additive, a positive film forming additive, and may further include an additive that may improve some performance of the battery, such as an additive that improve overcharge performance of the battery, and an additive that improve high or low temperature performance of the battery, etc.

In addition, the secondary battery, the battery module, the battery pack and the power consumption apparatus of the present application may be described below with reference to the accompanying drawings as appropriate.

In one embodiment of the present application, provided is a secondary battery, including the electrolytic solution as described above.

In general, the secondary battery includes a positive electrode sheet, a negative electrode sheet, an electrolytic solution and a separator. During the charging and discharging process of the battery, an active ion is inserted and extracted back and forth between the positive electrode sheet and the negative electrode sheet. The electrolytic solution plays a role of conducting the ion between the positive electrode sheet and the negative electrode sheet. The separator is provided between the positive electrode sheet and the negative electrode sheet, and mainly plays a role of preventing the short circuit of the positive electrode and negative electrode, and at the same time, it may allow the ion to pass through.

### [Positive electrode sheet]

A positive electrode sheet includes a positive electrode current collector and a positive electrode film layer provided on at least one surface of the positive electrode current collector, and the positive film layer includes a positive active material.

As an example, the positive electrode current collector has two opposite surfaces in its thickness direction, and the positive electrode film layer is provided on either or both of the two opposite surfaces of the positive electrode current collector.

In some embodiments, the positive electrode current collector may use a metal foil or a composite current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material may use a positive active material for batteries known in the art. As an example, the positive active material may include at least one of the following materials: an olivine-structured lithium-containing phosphate, a lithium transition metal oxide, and their respective modified compounds. However, the present application is not limited to these materials, and other conventional materials that may be used as the positive active material for the battery may further be used. One type of these positive active materials may be used alone, or two or more types thereof may be used in combination. Where examples of the lithium transition metal oxide may include, but are not limited to, at least one of lithium cobalt oxides (such as LiCoO₂), lithium nickel oxides (such as LiNiO₂), lithium manganese oxides (such as LiMnO₂, LiMn₂O₄), lithium nickel cobalt oxides, lithium manganese cobalt oxides, lithium nickel manganese oxides (such as LiNi_{0.5}Mn_{1.5}O₄), lithium nickel cobalt manganese oxide (such as LiNiₓCo_{y}Mn_{1-x-y}O₂ (0<x<1, 0<y<1, x+y<1)), lithium nickel cobalt aluminum oxide (such as LiNi_{0.85}Co_{0.15}Al_{0.05}O₂) and their modified compounds. Examples of the olivine-structured lithium-containing phosphate may include, but are not limited to, at least one of lithium iron phosphate (such as LiFePO₄ (LFP for short)), a composite of lithium iron phosphate and carbon, lithium manganese phosphate (such as LiMnPO₄), a composite of lithium manganese phosphate and carbon, lithium manganese iron phosphate, and a composite of lithium manganese iron phosphate and carbon.

In some embodiments, the positive electrode film layer may further optionally include a binder. As an example, the binder may include at least one of polyvinylidene fluoride (PVDF) and its modified derivatives (such as carboxylic acid and acrylic acid modification), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoro containing acrylate resin. Optionally, a percentage by weight of the binder in the positive film layer is less than or equal to 2%, based on a total mass meter of the positive film layer.

In some embodiments, the positive electrode film layer may further optionally include a conductive agent. As an example, the conductive agent may include at least one of superconducting carbon, acetylene black, carbon black, Ketjen black, carbon dots, carbon nanotubes, graphene, and carbon nanofibers. Optionally, a percentage by weight of the conductive agent in the positive film layer is 1-10%, based on the total mass meter of the positive film layer. Further optionally, a weight ratio of the conductive agent to the positive active material in the positive film layer is greater than or equal to 1.5:95.5.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry, the positive electrode slurry is coated on the positive electrode current collector, and then after drying, cold pressing and other processes are performed, a positive electrode sheet may be obtained.

### [Negative electrode sheet]

A negative electrode sheet includes a negative electrode current collector and a negative electrode film layer provided on at least one surface of the negative electrode current collector, and the negative electrode film layer includes a negative active material.

As an example, the negative electrode current collector has two opposite surfaces in its thickness direction, and the negative electrode film layer is provided on either or both of the two opposite surfaces of the negative electrode current collector.

In some embodiments, the negative electrode current collector may use a metal foil or a composite current collector. For example, as the metal foil, a copper foil may be used. The composite current collector may include a polymer material base layer and a metal layer formed on at least one surface of the polymer material base layer. The composite current collector may be formed by forming a metal material (copper, copper alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), or the like).

In some embodiments, the negative active material may use a negative active material for batteries known in the art. As an example, the negative active material may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin oxide compounds and tin alloys. However, the present application is not limited to these materials, and other conventional materials that may be used as the negative active material for the battery may further be used. One type of these negative active materials may be used alone, or two or more types may be used in combination.

In some embodiments, the negative electrode film layer further optionally includes a binder. The binder may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer may further optionally include a conductive agent. The conductive agent may selected from at least one of superconducting carbon, acetylene black, carbon black, Ketjen black, carbon dot, carbon nanotube, grapheme and carbon nanofibe.

In some embodiments, the negative film layer may further optionally include other adjuvants, for example, thickening agents (such as sodium carboxymethyl cellulose (CMC-Na)), or the like.

In some embodiments, the negative electrode sheet may be prepared by the following manner: the above components used to prepare the negative electrode sheet, such as the negative active material, the conductive agent, the binder and any other components are dispersed in a solvent (such as deionized water) to form a negative electrode slurry; and the negative electrode slurry is coated on the negative electrode current collector, and after drying, cold pressing and other processes, the negative electrode sheet may be obtained.

In some embodiments, the negative electrode sheet includes a lithium containing metal material.

In some embodiments, the lithium containing metal material is a metallic lithium or a lithium alloy.

In some embodiments, the lithium alloy includes one or more of Li-Sn alloy, Li-Sn-O alloy, Li-Mg alloy, Li-B alloy, and Li-Al alloy.

In some embodiments, when the negative electrode sheet includes the lithium containing metal material, a preparation process of the negative electrode sheet includes: a lithium containing metal material with a thickness of 20-50µm and a copper foil with a thickness of 5-13µm are rolled under a pressure of 20-50MPa and are cut to obtain the negative electrode sheet.

### [Separator]

In some embodiments, the secondary battery further includes a separator. There is no particular limitation on the type of the separator in the present application, and any well-known porous-structure separator with good chemical stability and mechanical stability may be selected.

In some embodiments, the material of the separator may be selected from at least one of polyethylene, polypropylene, polyvinylidene fluoride, polytetrafluoroethylene, polyacrylonitrile, polyimide, polyamide, polyester, natural fiber, glass fiber and non-woven fabric. The separator may be a single-layer thin film, or may be a multi-layer composite thin film, and is not particularly limited. When the separator is the multi-layer composite thin film, the materials of each layer may be the same or different, and are not particularly limited.

In some embodiments, the positive electrode sheet, the negative electrode sheet and the separator may be made into an electrode assembly through a winding process or a lamination process.

In some embodiments, a secondary battery may include an outer package. The outer package may be used to package the above electrode assembly and electrolyte.

In some embodiments, the outer package of the secondary battery may be a hard shell such as a hard plastic shell, an aluminum shell, or a steel shell. The outer package of the secondary battery may be a soft package, such as a bag-type soft package. A material of the soft package may be plastic, for example, polypropylene, polybutylene terephthalate, and polybutylene succinate may be listed.

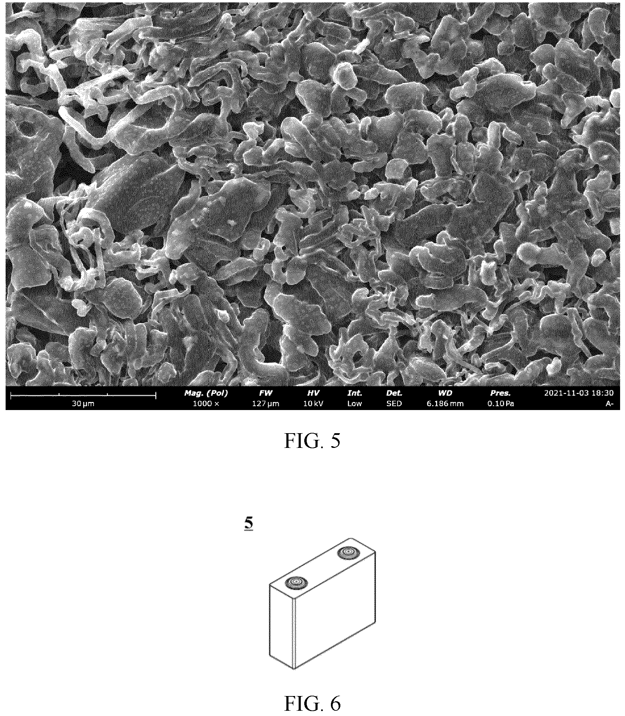

The shape of the secondary battery is not particularly limited in the present application, and may be cylindrical, square, or any other shapes. For example, FIG. 6 shows a secondary battery 5 of a square structure as an example.

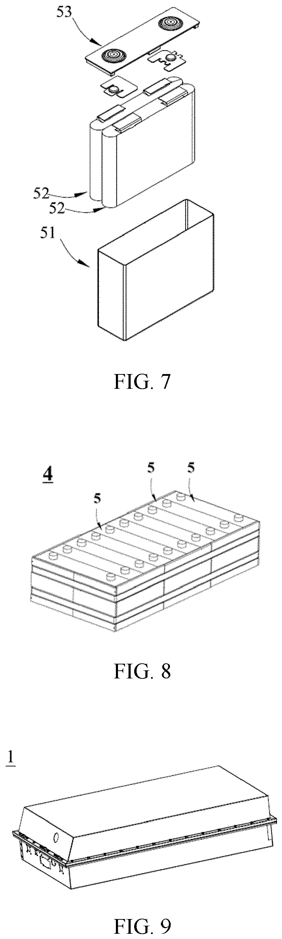

In some embodiments, referring to FIG. 7, the outer package may include a housing 51 and a cover plate 53. The housing 51 may include a bottom plate and a side plate connected to the bottom plate. The bottom plate and the side plate are enclosed to form an accommodating cavity. The housing 51 has an opening communicating with the accommodating cavity, and the cover plate 53 may cover the opening to close the accommodating cavity. A positive electrode sheet, a negative electrode sheet, and a membrane may be subject to a winding process or a lamination process to form an electrode assembly 52. The electrode assembly 52 is packaged in the accommodating cavity. The electrolytic solution is infiltrated in the electrode assembly 52. The number of electrode assemblies 52 included in the secondary battery 5 may be one or more, and the specific number may be selected by those skilled in the art according to specific actual needs.

In some embodiments, secondary batteries may be assembled into a battery module, and the number of secondary batteries included in the battery module may include one or more, and the specific number may be selected by those skilled in the art according to application and capacity of the battery module.

FIG. 8 shows a battery module 4 as an example. Referring to FIG. 8, in the battery module 4, a plurality of secondary batteries 5 may be sequentially arranged along a length direction of the battery module 4. Certainly, they may be arranged in accordance with any other manner. Further, the plurality of secondary batteries 5 may be fixed by using fasteners.

Optionally, the battery module 4 may further include a shell with an accommodating space, and the plurality of secondary batteries 5 are accommodated in the accommodating space.

In some embodiments, the above battery modules may be further assembled into a battery pack, and the number of battery modules included in the battery pack may be one or more, and the specific number may be selected by those skilled in the art according to application and capacity of the battery pack.

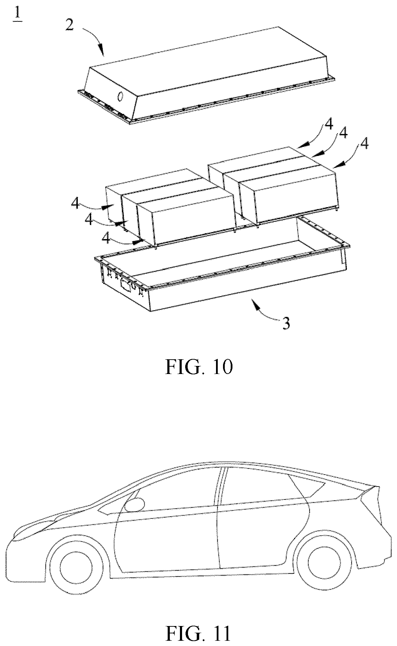

FIG. 9 and FIG. 10 show a battery pack 1 as an example. Referring to FIG. 8 and FIG. 9, the battery pack 1 may include a battery box and a plurality of battery modules 4 disposed in the battery box. The battery box includes an upper box body 2 and a lower box body 3. The upper box body 2 may cover the lower box body 3 and form an enclosed space for accommodating the battery modules 4. The plurality of battery modules 4 may be arranged in the battery box in any manner.

In addition, the present application further provides a power consumption apparatus, the power consumption apparatus including at least one of the secondary battery, the battery module, or the battery pack provided in the present application. The secondary battery, the battery module, or the battery pack may be used as a power source of the power consumption apparatus or may be used as an energy storage unit of the power consumption apparatus. The power consumption apparatus may include a mobile device (for example, a mobile phone, a notebook computer, and the like), an electric vehicle (for example, a pure electric vehicle, a hybrid electric vehicle, a plug-in hybrid electric vehicle, an electric bicycle, an electric scooter, an electric golf cart, an electric truck, and the like), an electric train, a ship and a satellite, an energy storage system, or the like, but is not limited to this.

As the power consumption apparatus, a secondary battery, a battery module, or a battery pack may be selected according to usage requirements.

FIG. 11 shows a power consumption apparatus as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

An apparatus as another example may be a mobile phone, a tablet computer, a notebook computer, or the like. The apparatus usually requires lightness and thinness, and a secondary battery may be used as a power source.

### Embodiment

Hereinafter, embodiments of the present application will be described. The embodiments described below are illustrative, only used to explain the present application, and should not be construed as a limitation to the present application. Where specific techniques or conditions are not specified in the embodiments, they are performed according to techniques or conditions described in the literature in the art or according to product specifications. The reagents or instruments used without specifying the manufacturer are conventional products that may be obtained from the market.

### Embodiment 1-1

### [Preparation of Electrolytic Solution]

In a drying room, ethyl carbonate (EC) and methyl ethyl carbonate (EMC) are uniformly mixed according to a volume ratio of 7:3 to obtain an organic solvent. A lithium salt lithium difluorosulfonylimide (LiFSI) and an additive NH₄VO₃ are added to the organic solvent to obtain a solution with the additive NH₄VO₃ with a percentage by weight of 0.25% and the LiFSI with a concentration of 1mol/L, that is, an electrolytic solution, where the additive NH₄VO₃ is added in a form of a nanoparticle with a particle size distribution of 300-800nm.

### [Preparation of Positive Electrode Sheet]

A positive active material LiNi_{0.8}Co_{0.1}Mn_{0.1}O₂ (NCM811), a conductive agent acetylene black and an adhesive PVDF are mixed according to a mass ratio of 96:2:2, a solvent N-methylpyrrolidone (NMP) is added, and are stirred until a system is homogeneous to obtain a positive electrode slurry; and the positive electrode slurry is coated evenly to a positive electrode current collector aluminum foil with a thickness of 12µm, dried at room temperature, transferred to an oven at 50°C for 5 hours, and then is cut into pieces with a diameter of 40x50 mm square plate as a positive electrode sheet, where a battery capacity is 140mAh and a positive electrode surface capacity is 3.5mAh • cm⁻².

### [Preparation of Negative Electrode Sheet]

A lithium foil with a thickness of 25µm is pressed onto a copper foil with a thickness of 8µm under a pressure of 5MPa, and it is cut to obtain a negative electrode sheet.

### [Preparation of Secondary Battery]

A polypropylene film with a thickness of 10µm is used as a separator, the above positive electrode sheet, the separator, and the negative electrode sheet are sacked in order, so that the separator is placed between the positive electrode sheet and the negative electrode sheet to play a role of isolation, and then is placed in a battery housing, the above electrolytic solution is injected after drying, and a secondary battery is obtained after forming, standing, and other processes.

### Embodiment 1-2

The preparation process of the secondary battery refers to Embodiment 1 overall, and the difference is that a percentage by weight of the additive in the electrolytic solution is 0.01%.

### Embodiment 1-3

A preparation process of the secondary battery refers to Embodiment 1 overall, and the difference is that a percentage by weight of the additive in the electrolytic solution is 0.1%.

### Embodiment 1-4

A preparation process of the secondary battery refers to Embodiment 1 overall, and the difference is that a percentage by weight of the additive in the electrolytic solution is 0.5%.

### Embodiment 1-5

A preparation process of the secondary battery refers to Embodiment 1 overall, and the difference is that a percentage by weight of the additive in the electrolytic solution is 1%.

### Embodiment 1-6

A preparation process of the secondary battery refers to Embodiment 1 overall, and the difference is that a percentage by weight of the additive in the electrolytic solution is 2%.

### Embodiment 1-7

A preparation process of the secondary battery refers to Embodiment 1 overall, and the difference is that the additive in the electrolytic solution is replaced from NH₄VO₃ to KMnO₄.

### Embodiment 1-8

A preparation process of the secondary battery refers to Embodiment 1 overall, and the difference is that the additive in the electrolytic solution is replaced from NH₄VO₃ to Na₂FeO₄.

### Comparative example 1-1

A preparation process of the secondary battery refers to Embodiment 1 overall, and the difference is that there is no additive in the electrolytic solution.

### Embodiment 2-1

A preparation process of the secondary battery refers to Embodiment 1 overall, and the difference is that the electrolytic solution also contains a difluoro vinyl carbonate (DFEC) as a cosolvent, with a percentage by weight of 2%.

### Embodiment 2-2

A preparation process of the secondary battery refers to Embodiment 2-1 overall, and the difference is that a percentage by weight of the additive in the electrolytic solution is 0.01%.

### Embodiment 2-3

A preparation process of the secondary battery refers to Embodiment 2-1 overall, and the difference is that a percentage by weight of the additive in the electrolytic solution is 0.1%.

### Embodiment 2-4

A preparation process of the secondary battery refers to Embodiment 2-1 overall, and the difference is that a percentage by weight of the additive in the electrolytic solution is 0.5%.

### Embodiment 2-5

A preparation process of the secondary battery refers to Embodiment 2-1 overall, and the difference is that a percentage by weight of the additive in the electrolytic solution is 1%.

### Embodiment 2-6

A preparation process of the secondary battery refers to Embodiment 2-1 overall, and the difference is that a percentage by weight of the additive in the electrolytic solution is 2%.

### Embodiment 2-7

A preparation process of the secondary battery refers to Embodiment 2-1 overall, and the difference is that a percentage by weight of the cosolvent in the electrolytic solution is 1%.

### Embodiment 2-8

A preparation process of the secondary battery refers to Embodiment 2-1 overall, and the difference is that a percentage by weight of the cosolvent in the electrolytic solution is 3%.

### Embodiment 2-9

A preparation process of the secondary battery refers to Embodiment 2-1 overall, and the difference is that a percentage by weight of the cosolvent in the electrolytic solution is 6%.

### Embodiment 2-10

A preparation process of the secondary battery refers to Embodiment 2-1 overall, and the difference is that a percentage by weight of the cosolvent in the electrolytic solution is 8%.

### Embodiment 2-11

A preparation process of the secondary battery refers to Embodiment 2-1 overall, and the difference is that the cosolvent in the electrolytic solution is replaced from monofluorobenzene (FB) to DFEC.

### Comparative example 2-1

A preparation process of the secondary battery refers to Embodiment 2-1 overall, and the difference is that there is no additive in the electrolytic solution.

### Embodiment 3-1

A preparation process of the secondary battery refers to Embodiment 2-1 overall, and the difference is that the positive active material is replaced from LiFePO₄ to NCM₈₁₁.

### Embodiment 3-2

A preparation process of the secondary battery refers to Embodiment 2-1 overall, and the differences are that the positive active material is replaced from NCM₈₁₁ to LiCoO₂, and a concentration of a lithium salt in the electrolytic solution is 0.5mol/L.

### Embodiment 3-3

A preparation process of the secondary battery refers to Embodiment 2-1 overall, and the difference is that the positive active material is replaced from NCM₈₁₁ to LiNi_{0.8}Co_{0.15}Al_{0.05}O₂ (NCA), and the concentration of the lithium salt in the electrolytic solution is 0.5mol/L.

### Embodiment 3-4

A preparation process of the secondary battery refers to Embodiment 2-1 overall, and the difference is that the concentration of the lithium salt in the electrolytic solution is 2mol/L.

### Embodiment 3-5

A preparation process of the secondary battery refers to Embodiment 2-1 overall, and the difference is that the electrolytic solution further contains a fluoroethylene carbonate (FEC) with a percentage by weight of 8%.

### [Secondary Battery Performance Test]

### 1. Capacity retention rate test of a secondary battery

A secondary battery is charged at 25°C with a constant current of 1.5mAh • cm⁻² to 4.3V, then is charged at 4.3V constant voltage until the current drops to 0.3mAh • cm⁻², and then is discharged at a constant current of 1.5mAh •cm⁻² to 2.8V to obtain a first cycle discharge specific capacity (Cd1); and is charged and discharged repeatedly to an n^{th} cycle to obtain a discharge specific capacity of the secondary battery after cycling n cycles, which is recorded as Cdn. A capacity retention rate of the secondary battery is calculated according to the following formula: capacity retention rate= discharge specific capacity (Cdn) after cycling n cycles/a first cycle discharge capacity (Cd1).

Where a charging cut-off voltage of a lithium iron phosphate positive secondary battery is 4.0V

### 2. Surface observation of a lithium metal negative electrode sheet

The above secondary battery after cycling 100 cycles is disassembled, and a surface morphology of the lithium metal negative electrode sheet is observed by magnifying 1000 times through an optical microscope (Axio Observer Z 1M) to see whether a lithium dendrite is generated.

The above embodiments and comparative examples are texted according to the above processes, and see Table 1-Table 3 for specific values.

**Table 1: Influence of an additive on battery performance**

| Embodiment | Electrolytic solution | | Battery performance | |
|---|---|---|---|---|
| | Additive | Content of the Anode additive | Capacity retention rate for cycling 100 cycles (%) | Lithium dendrite |
| Embodiment 1-1 | NH₄VO₃ | 0.25% | 79.2. | Slight |
| Embodiment 1-2 | NH₄VO₃ | 0.01% | 75.4 | Less serious |
| Embodiment 1-3 | NH₄VO₃ | 0.1% | 78.9 | Moderate |
| Embodiment 1-4 | NH₄VO₃ | 0.5% | 78.0 | Moderate |
| Embodiment 1-5 | NH₄VO₃ | 1% | 75.8 | Moderate |
| Embodiment 1-6 | NH₄VO₃ | 2% | 73.4 | Less serious |
| Embodiment 1-7 | KMnO₄ | 0.25% | 78.1 | Slight |
| Embodiment 1-8 | Na₂FeO₄ | 0.25% | 78.0 | Slight |
| Comparative example 1-1 | / | / | 8.6 | Serious |

**Table 2: Influence of an additive and a cosolvent on battery performance**

| Embodiment | Electrolytic solution | | | | Battery performance | |
|---|---|---|---|---|---|---|
| | Additive | Content of the additive | Cosolvent | Content of the cosolvent | Capacity retention rate for cycling 100 cycles (%) | Lithium dendrite |
| Embodiment 2-1 | NH4VO3 | 0.25% | DFEC | 2% | 90.6 | None |
| Embodiment 2-2 | NH4VO3 | 0.01% | DFEC | 2% | 73.7 | None |
| Embodiment 2-3 | NH4VO3 | 0.1% | DFEC | 2% | 81.2 | None |
| Embodiment 2-4 | NH4VO3 | 0.5% | DFEC | 2% | 83.5 | None |
| Embodiment 2-5 | NH4VO3 | 1% | DFEC | 2% | 78.5 | None |
| Embodiment 2-6 | NH4VO3 | 2% | DFEC | 2% | 77.4 | None |
| Embodiment 2-7 | NH4VO3 | 0.25% | DFEC | 1% | 79.9 | None |
| Embodiment 2-8 | NH4VO3 | 0.25% | DFEC | 3% | 79.6 | None |
| Embodiment 2-9 | NH4VO3 | 0.25% | DFEC | 6% | 78.4 | None |
| Embodiment 2-10 | NH4VO3 | 0.25% | DFEC | 8% | 72.6 | None |
| Embodiment 2-11 | NH4VO3 | 0.25% | FB | 2% | 87.3 | None |
| Comparative example 2-1 | / | / | DFEC | 2% | 8.1 | Serious |

**Table 3: Influence of other parameters on battery performance**

| Embodi ment | Positive electrod e sheet | Electrolytic solution | | | | | | Battery performance | |
|---|---|---|---|---|---|---|---|---|---|
| | Positive active material | Concentr ation of lithium salt | Additive | Conte nt of the additi ve | Cosolv ent | Conte nt of the cosolv ent | Othe r Addi tives | Capacity retention rate for cycling 100 cycles (%) | Lithiu m dendri te |
| Embodi ment 2-1 | NCM₈₁₁ | 1mol/L | NH₄VO₃ | 0.25 % | DFEC | 2% | / | 90.6 | None |
| Embodi ment 3-1 | LiFePO 4 | 1mol/L | NH₄VO₃ | 0.25 % | DFEC | 2% | / | 91.6 | None |
| Embodi ment 3-2 | LiCoOz | 0.5mol/L | NH₄VO₃ | 0.25 % | DFEC | 2% | / | 85.6 | None |
| Embodi ment 3-3 | NCA | 0.5mol/L | NH₄VO₃ | 0.25 % | DFEC | 2% | / | 83.4 | None |
| Embodi ment 3-4 | NCM₈₁₁ | 2mol/L | NH₄VO₃ | 0.25 % | DFEC | 2% | / | 91.8 | None |
| Embodi ment 3-5 | NCM₈₁₁ | 1mol/L | NH₄VO₃ | 0.25 % | DFEC | 2% | FEC | 92.2 | None |

It may be seen from Table 1 to Table 3 that capacity retention rates for cycling 100 cycles of the secondary batteries in all above embodiments are higher than that of the secondary batteries in comparative examples. In addition, lithium dendrite growths of the secondary batteries in all embodiments are inhibited.

Comprehensively compare Embodiment 1-1 to Embodiment 1-8, compared with regard to Comparative example 1-1, the addition of the additive has significantly improved cycle performance of the secondary battery, indicating that the electrolytic solution may dissolve a small amount of additive.

Although the embodiments show the above technical effects compared to Comparative example 1-1, if the added amount of the additive is too small, the additive may consume quickly, and if the added amount of the additive is too large, agglomeration may occur to form a cluster. Therefore, it is preferable to add an appropriate amount of the additive, that is, 0.01-1%, which may further significantly improve the capacity retention rate of the secondary battery. When the content of the additive is 0.1-0.5%, the capacity retention rate of the secondary battery may be further improved. In addition, the use of additives with the same effect may also achieve the effect of improving cycle performance of the secondary battery, as shown in Embodiments 1-7 and 1-8.

Adding an appropriate amount of cosolvent may improve a solubility of the additive in the electrolytic solution, thus further improving cycle performance of the secondary battery, as shown in Embodiments 2-1 to 2-6 in Table 2. However, if the content of the cosolvent is low, it may not significantly improve the cycle performance of abattery, and if the content of the cosolvent is high, it may dilute the electrolytic solution and reduce a cycle life. It is preferable to add an appropriate amount of the cosolvent, which may further significantly improve cycle performance of the secondary battery. When the content of the cosolvent is 1-3%, cycle performance of the secondary battery may be further improved. Where in Embodiment 2-2, due to a low content of the additive, the addition of the cosolvent leads to a slight reduction in the cycling effect, but lithium dendrite effect is significantly improved.

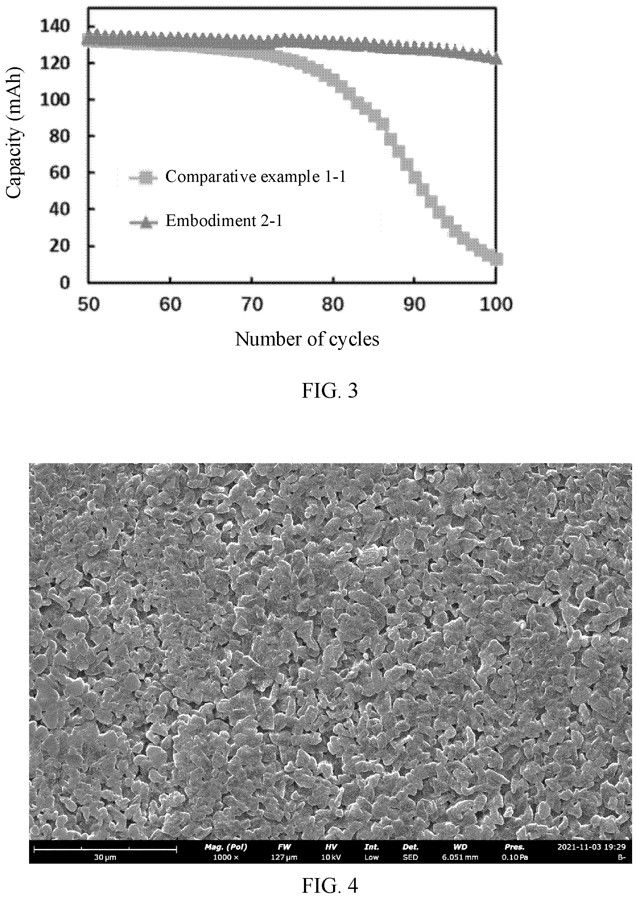

In addition, it may be seen from FIG. 4 that when the electrolytic solution contains the additive and the cosolvent, deposition on the lithium metal negative electrode sheet is relatively dense and has no dendritic morphology, as shown in Embodiment 2-1; and as may be seen from FIG. 5, when the electrolytic solution does not contain the additive and the cosolvent, a large number of lithium dendrites appear on the lithium metal negative electrode sheet, and the size is large, such as in Comparative example 1-1; that is, when the electrolytic solution contains the additive and the cosolvent, the growth of lithium dendrite may be inhibited.

Comprehensively comparing Embodiment 2-1 and Embodiments 3-1 to 3-4, the additive has a good compatibility with a positive active material and a concentration of electrolytic solution lithium salt. In addition, when the electrolytic solution further contains a film forming additive, cycle performance of the secondary battery may be further improved.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. An electrolytic solution, comprising a lithium salt, an organic solvent and an additive, wherein the additive is a salt with a formula of M1M2ₓO_{y}, the M1 is selected from one or more of alkali metal element and NH4⁺, the M2 is selected from one or more of VB-VIII group elements in a fourth cycle of a periodic table of elements, x is 0.01-4, and y is 0.1-9.

2. The electrolytic solution according to claim 1, wherein the alkali metal element is one or more of Li, Na, K and Rb.

3. The electrolytic solution according to claim 1 or 2, wherein the VB-VIII group elements in the fourth cycle of the periodic table of elements are one or more of V, Cr, Mn, Fe, Co and Ni.

4. The electrolytic solution according to any one of claims 1-3, wherein the additive is one or more of NH₄VO₃, KMnO₄, Na₂FeO₄, LiCoO₂, Na₃VO₄, NaVO₃, K₂Cr₂O₇ and NaCoO₂, and optionally NH₄VO₃ or KMnO₄.

5. The electrolytic solution according to any one of claims 1-4, wherein a content of the additive is 0.01-1 weight%, and optionally 0.1-0.5 weight%, based on a total weight of the electrolytic solution.

6. The electrolytic solution according to any one of claims 1-5, wherein the additive is added to the electrolytic solution in a form of a nanoparticle, and a particle size of the nanoparticle is 300-800nm.

7. The electrolytic solution according to any one of claims 1-6, wherein a content of the lithium salt is 0.5-2mol/L, and optionally 1-2mol/L, based on a total volume of electrolytic solution.

8. The electrolytic solution according to any one of claims 1-7, wherein a content of the organic solvent is 80-85 weight%, based on the total weight of the electrolytic solution.

9. The electrolytic solution according to any one of claims 1-8, wherein the electrolytic solution further compromises a cosolvent, and optionally, the cosolvent is one or more of propylene carbonate, difluoro vinyl carbonate, dimethyl carbonate, diethyl carbonate, monofluorobenzene, difluorobenzene, trifluorobenzene, succinonitrile and 1,3-dioxolane.

10. The electrolytic solution according to claim 9, wherein a content of the cosolvent is greater than 0 and less than or equal to 6 weight%, and optionally 1-3 weight%, based on the total weight of the electrolytic solution.

11. A secondary battery, comprising the electrolytic solution according to any one of claims 1-10.

12. A battery module, comprising the secondary battery according to claim 11.

13. A battery pack, comprising the battery module according to claim 12.

14. A power consumption apparatus, comprising at least one selected from the secondary battery according to claim 11, the battery module according to claim 12 or the battery pack according to claim 13.
